# EUROPEAN PATENT APPLICATION

(11) **EP 4 835 004 A1**
(43) Date of publication of application: **04.11.2026**
(21) Application number: 24913017.0
(22) Date of filing: 26.12.2024
(51) Int. Cl.: C08L 71/02, C08G 65/336

(54) **CURABLE COMPOSITION AND CURED PRODUCT**

(30) Priority: 27.12.2023 JP 2023220986
(71) Applicant: AGC Inc., Chiyoda-ku Tokyo 100-8405 (JP)
(72) Inventor: KANAMARU, Haruki, Tokyo 100-8405 (JP); LIU, Xuhui, Tokyo 100-8405 (JP); SUNAYAMA, Yoshitaka, Tokyo 100-8405 (JP)
(74) Representative: Müller-Boré & Partner Patentanwälte PartG mbB
(86) International application number: PCT/JP2024/046174
(87) International publication number: WO 2025/143131

(57) **Abstract**

The present invention pertains to a curable composition including a polymer A and a polymer B, in which the polymer A is an oxyalkylene polymer that has an average of 2.00 or more terminal groups within one molecule and has a reactive silicon group represented by Formula (1); the terminal groups of the polymer A include a reactive silicon group, an unsaturated group, an isocyanate group, an amino group, or a hydroxyl group; the polymer B is an oxyalkylene polymer that has an average of 1.00 to 1.30 terminal groups within one molecule and has a reactive silicon group which is formed via one or more organic groups represented by the following Formula (i) and is represented by Formula (2); in which the terminal groups of the polymer B include a reactive silicon group, an unsaturated group, an isocyanate group, an amino group, or a hydroxyl group; and the polymer B has a number average molecular weight of 5,000 or less.

-SiR¹ₐX¹₃₋ₐ Formula (1)

-C(=O)NH- Formula (i)

-SiR²_{b}X²_{3-b} Formula (2)

## Description

### TECHNICAL FIELD

The present invention relates to a curable composition and a cured product.

Priority is claimed on Japanese Patent Application No. 2023-220986, filed December 27, 2023, the content of which is incorporated herein by reference.

The present invention relates to a curable composition containing a polymer having a silicon group which has a hydroxyl group or a hydrolyzable group bonded to a silicon atom and which is capable of crosslinking by forming a siloxane bond (hereinafter referred to as a "reactive silicon group").

### BACKGROUND ART

It is known that a polymer having at least one reactive silicon group within one molecule has a property to crosslink even at room temperature through the formation of siloxane bonds accompanied by a hydrolysis reaction and the like of the reactive silicon group due to moisture or the like, thereby a rubber-like cured product is obtained.

Among these polymers having a reactive silicon group, those having main chain skeleton of oxyalkylene polymers, saturated hydrocarbon polymers, alkyl acrylate polymers, and alkyl methacrylate polymers have already been industrially produced and widely used in applications such as sealants, adhesives and paints. When a curable composition containing these polymers having a reactive silicon group is used as an adhesive, the curability of the curable composition, elongation of the cured product, and adhesiveness to adherends are important. A high modulus is required as a physical property of the cured product.

On the other hand, in consideration of the ease of handling the curable composition, plasticizers are used for the purpose of reducing the viscosity of the curable composition.

Patent Document 1 discloses a curable composition composed of an organic polymer (A) having a reactive silicon group and an organic polymer (B) containing an average of 0.5 to 1.5 reactive silicon groups per molecule. It is described that the organic polymer (B) functions as a reactive plasticizer or diluent, and is capable of reducing viscosity. It is disclosed that this curable composition can be used as an elastic sealant or adhesive.

### Citation List

### Patent Document

Patent Document 1: International Patent Publication No. 2005/073322

### SUMMARY OF INVENTION

### Technical Problem

For example, in the synthesis method of Synthesis Example 7 in Examples of Patent Document 1, a hydroxyl group of a precursor polymer is converted into an alkenyloxy group having a carbon-carbon double bond at the molecular terminal. It is synthesized by a method in which a silylating agent capable of introducing a reactive silicon group is then reacted with the carbon-carbon double bond at the molecular terminal of the alkenyloxy group to convert the alkenyloxy group into a group having a reactive silicon group. In this synthesis method, when the silylating agent is reacted, some of the carbon-carbon double bonds at the molecular terminals of the alkenyloxy groups are transferred to the interior. Because these internally transferred carbon-carbon double bonds do not react with the silylating agent, organic polymers without reactive silicon groups are also produced. For this reason, when a polymer B1 produced in this manner containing an organic polymer with no reactive silicon group is used as a plasticizer, the amount of reactive silicon groups may not be sufficient, resulting in bleed out of the cured product.

Further, in order to reduce viscosity, it is common to use the polymer B1 or the like with a low molecular weight. However, as the number of moles of polymer B1 per parts increases, siloxane bonds that do not contribute to crosslinking increase, and the modulus of the cured product decreases, resulting in a problem that the modulus of the cured product relative to viscosity does not increase.

The present invention has been made in view of the above circumstances and has an object of providing a curable composition from which a cured product exhibiting a high modulus relative to viscosity and unlikely to cause bleed out can be obtained. Solution to Problem

The present invention includes the following aspects [1] to [8].
[1] A curable composition including a polymer A and a polymer B, in which the aforementioned polymer A is an oxyalkylene polymer that has an average of 2.00 or more terminal groups within one molecule and has a reactive silicon group represented by the following Formula (1); the aforementioned terminal groups of the aforementioned polymer A include the aforementioned reactive silicon group, an unsaturated group, an isocyanate group, an amino group, or a hydroxyl group; the aforementioned polymer B is an oxyalkylene polymer that has an average of 1.00 to 1.30 terminal groups within one molecule and has a reactive silicon group which is formed via one or more organic groups represented by the following Formula (i) and is represented by the following Formula (2); the aforementioned terminal groups of the aforementioned polymer B include the aforementioned reactive silicon group, an unsaturated group, an isocyanate group, an amino group, or a hydroxyl group; and the aforementioned polymer B has a number average molecular weight of 5,000 or less.

   -SiR¹ₐX¹₃₋ₐ Formula (1)

   [In the Formula (1), R¹ is a monovalent organic group having 1 to 20 carbon atoms and represents an organic group other than a hydrolyzable group, and X¹ represents a hydroxyl group or a hydrolyzable group. a is an integer from 0 to 2. When a is 2, R¹ groups may be the same as or different from each other, and when a is 0 or 1, X¹ groups may be the same as or different from each other.]

   -C(=O)NH- Formula (i)

   -SiR²_{b}X² _{3-b} Formula (2)

   [In the Formula (2), R² is a monovalent organic group having 1 to 20 carbon atoms and represents an organic group other than a hydrolyzable group, and X² represents a hydroxyl group or a hydrolyzable group. b is an integer from 0 to 2. When b is 2, R² groups may be the same as or different from each other, and when b is 0 or 1, X² groups may be the same as or different from each other.]
[2] The curable composition according to [1], in which the number of organic groups represented by the aforementioned Formula (i) contained in the aforementioned polymer B is one.
[3] The curable composition according to [1] or [2], in which a content of the aforementioned polymer B is from 20 to 80 parts by mass with respect to a total content of 100 parts by mass of the aforementioned polymer A and the aforementioned polymer B.
[4] The curable composition according to any one of [1] to [3], in which the aforementioned polymer A is an oxyalkylene polymer formed via one or more organic groups represented by the Formula (i).
[5] The curable composition according to any one of [1] to [4], in which the aforementioned polymer B has a number average molecular weight of 500 to 5,000.
[6] The curable composition according to any one of [1] to [5], in which the aforementioned polymer A has a number average molecular weight of 2,400 to 20,000.
[7] The curable composition according to any one of [1] to [6], in which a total content of the polymer A and the polymer B with respect to a total mass of the curable composition is from 2 to 70% by mass.
[8] A cured product of the curable composition according to any one of [1] to [7].

### Advantageous Effects of Invention

The curable composition of the present invention can obtain a cured product that exhibits a high modulus relative to viscosity and is unlikely to cause bleed out.

### BRIEF DESCRIPTION OF DRAWINGS

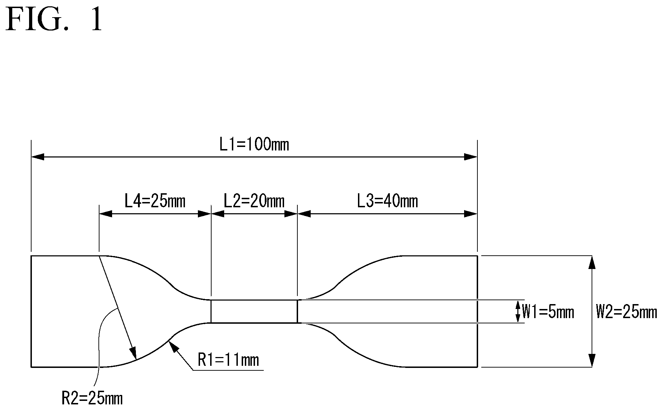

[FIG. 1] A schematic diagram showing a test specimen used in a tensile shear test.

### DESCRIPTION OF EMBODIMENTS

The meanings and definitions of the terms used in the present specification are as follows.

A numerical range represented by "to" means a numerical range in which numerical values before and after "to" are the lower limit and upper limit values.

A "unit" that constitutes a polymer means an atomic group directly formed by polymerization of a monomer.

The term "main chain" means a polymer chain formed by polymerization of two or more monomers. A "main chain" in the oxyalkylene polymer described later means a portion (polyoxyalkylene chain) containing a residue of an initiator and a repeating unit based on an alkylene oxide monomer.

An oxyalkylene polymer is a polymer composed of a main chain and terminal groups.

A "terminal group" of an oxyalkylene polymer means an atomic group containing an oxygen atom closest to the molecular terminal among oxygen atoms in the aforementioned polyoxyalkylene chain. However, if the atomic group contains a residue of an initiator, it is not regarded as a terminal group.

The term "active hydrogen-containing group" refers to at least one group selected from the group consisting of a hydroxyl group bonded to a carbon atom, a carboxy group, an amino group, a monovalent functional group obtained by removing one hydrogen atom from a primary amine, a hydrazide group, and a sulfanyl group.

An "active hydrogen" refers to a hydrogen atom based on the aforementioned active hydrogen-containing group and a hydrogen atom based on the hydroxyl group of water.

An "unsaturated group" means a group containing a carbon-carbon double bond or a group containing a carbon-carbon triple bond. The carbon-carbon double bond and the carbon-carbon triple bond may be located at the molecular terminal or may be located elsewhere other than the molecular terminal.

A "precursor polymer" is a polymer before introduction of a reactive silicon group, meaning an oxyalkylene polymer obtained by polymerizing an alkylene oxide monomer with an active hydrogen of the initiator and having a hydroxyl group as a terminal group.

The term "silylation rate" refers to a ratio of the number of reactive silicon groups with respect to the total number of reactive silicon groups, active hydrogen-containing groups, unsaturated groups, isocyanate groups, and amino groups in the terminal groups of an oxyalkylene polymer. More specifically, the silylation rate is calculated using the following formula.

Silylation rate (%) = 100 × number of reactive silicon groups / [number of reactive silicon groups + number of active hydrogen-containing groups + number of isocyanate groups + number of amino groups + (number of carbon-carbon double bonds) + (number of carbon-carbon triple bonds) × 2]

Silylation rate values can be measured by NMR analysis. Further, when the aforementioned reactive silicon group is introduced into the terminal group of the oxyalkylene polymer with a silylating agent described later, a ratio (mol%) of the number of silyl groups in the added silylating agent with respect to the number of terminal groups may also be used. However, in this case, a diisocyanate compound is used as the polyisocyanate compound in a method (c) described later.

The term "silylating agent" means a compound having a reactive silicon group and a functional group that reacts with an active hydrogen-containing group, an unsaturated group, an isocyanate group, or an amino group.

The number of organic groups represented by the Formula (i) can be measured by NMR analysis.

The "number of terminal groups" is a value calculated by a method of directly measuring the unsaturated group concentration, for example, by introducing an unsaturated group into a precursor polymer of an oxyalkylene polymer, followed by titration analysis based on the principle of an iodine value measurement method specified in JIS K 0070 (1992). In addition, the "number of terminal groups" can also be obtained by calculation from the number of active hydrogen-containing groups in the initiator and the molecular weight. The "number of terminal groups" in the oxyalkylene polymer is the same number as the number of active hydrogens in the initiator and the number of terminal groups in the precursor polymer, as described later.

The number average molecular weight (Mn) and weight average molecular weight (Mw) in the present specification are polystyrene equivalent molecular weights measured using GPC with tetrahydrofuran as an eluent and using a polystyrene polymer with a known molecular weight to produce a calibration curve. A molecular weight distribution (Mw/Mn) is a ratio of Mw with respect to Mn.

A curable composition of the present embodiment contains: an oxyalkylene polymer (hereinafter referred to as a "polymer A") that has an average of 2.00 or more terminal groups within one molecule and has a reactive silicon group represented by the following Formula (1); and an oxyalkylene polymer (hereinafter referred to as a "polymer B") that has an average of 1.00 to 1.30 terminal groups within one molecule and has a reactive silicon group which is formed via one or more organic groups represented by the following Formula (i) and is represented by the following Formula (2). The terminal groups of the polymer A include the aforementioned reactive silicon group, an unsaturated group, an isocyanate group, an amino group, or an active hydrogen-containing group. The terminal groups of the polymer B include the aforementioned reactive silicon group, an unsaturated group, an isocyanate group, an amino group, or a hydroxyl group. The number average molecular weight of the polymer B is 5,000 or less.

-SiR¹ₐX¹₃₋ₐ Formula (1)

In the Formula (1), R¹ is a monovalent organic group having 1 to 20 carbon atoms and represents an organic group other than a hydrolyzable group, and X¹ represents a hydroxyl group or a hydrolyzable group. a is an integer from 0 to 2. When a is 2, R¹ groups may be the same as or different from each other, and when a is 0 or 1, X¹ groups may be the same as or different from each other.]

-C(=O)NH- Formula (i)

-SiR²_{b}X²_{3-b} Formula (2)

[In the Formula (2), R² is a monovalent organic group having 1 to 20 carbon atoms and represents an organic group other than a hydrolyzable group, and X² represents a hydroxyl group or a hydrolyzable group. b is an integer from 0 to 2. When b is 2, R² groups may be the same as or different from each other, and when b is 0 or 1, X² groups may be the same as or different from each other.]

### <Reactive silicon group>

The reactive silicon group has a hydroxyl group or a hydrolyzable group bonded to a silicon atom and can be crosslinked by forming a siloxane bond. A reaction to form a siloxane bond is accelerated by a curing catalyst. The reactive silicon group in the polymer A is represented by the following Formula (1):

-SiR¹ₐX¹₃₋ₐ Formula (1)

In the above Formula (1), R¹ is a monovalent organic group having 1 to 20 carbon atoms and represents an organic group other than a hydrolyzable group.

R¹ is preferably at least one selected from the group consisting of a hydrocarbon group having 1 to 20 carbon atoms and a triorganosiloxy group.

R¹ is preferably at least one selected from the group consisting of an alkyl group, a cycloalkyl group, an aryl group, an α-chloroalkyl group and a triorganosiloxy group. At least one selected from the group consisting of a linear or branched alkyl group having 1 to 4 carbon atoms, a cyclohexyl group, a phenyl group, a benzyl group, an α-chloromethyl group, a trimethylsiloxy group, a triethylsiloxy group and a triphenylsiloxy group is more preferable. A methyl group or an ethyl group is preferred from the viewpoint of favorable curability of the polymer having the reactive silicon group and favorable stability of the curable composition. An α-chloromethyl group is preferred from the viewpoint that the curing rate of the cured product is high. A methyl group is particularly preferred because it is readily available.

In the above Formula (1), X¹ represents a hydroxyl group or a hydrolyzable group.

Examples of the hydrolyzable group include an alkoxy group, an acyloxy group, a ketoximate group, an amino group, an amide group, an acid amide group, an aminooxy group, a sulfanyl group, and an alkenyloxy group.

An alkoxy group is preferred because it is moderately hydrolyzable and easy to handle. The alkoxy group is preferably a methoxy group, an ethoxy group or an isopropoxy group, and more preferably a methoxy group or an ethoxy group. When the alkoxy group is a methoxy group or an ethoxy group, a siloxane bond is rapidly formed, a crosslinked structure is easily formed in a cured product, and physical property values of the cured product are likely to be favorable.

In the above Formula (1), a is an integer from 0 to 2. When a is 2, R¹ groups may be the same as or different from each other. When a is 1 or less, X¹ groups may be the same as or different from each other. Since the modulus of the cured product is reduced when the crosslinking density due to a siloxane bond is lowered, a is preferably 2 or less, and more preferably a is 1 or less.

Examples of the reactive silicon group represented by the above Formula (1) include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a methyldiisopropoxysilyl group, an (α-chloromethyl)dimethoxysilyl group, and an (α-chloromethyl)diethoxysilyl group. A trimethoxysilyl group, a triethoxysilyl group, a dimethoxymethylsilyl group, and a diethoxymethylsilyl group are preferred, and a dimethoxymethylsilyl group is more preferred, from the viewpoint of high activity and favorable curability.

### <Polymer A>

The polymer A is an oxyalkylene polymer that has an average of 2.00 or more terminal groups within one molecule and has a reactive silicon group represented by the above Formula (1), in which the aforementioned terminal group contains the aforementioned reactive silicon group, an unsaturated group, an isocyanate group, an amino group, or a hydroxyl group. The polymer A in the curable composition of the present embodiment may be composed of two or more types.

The main chain of the polymer A is a polymer chain composed of an oxyalkylene chain containing a residue of an initiator and a repeating unit based on one or more types of alkylene oxide monomers (hereinafter, a repeating unit based on a monomer will be simply referred to as a "monomer unit", and for example, a repeating unit based on an alkylene oxide monomer will be referred to as an "alkylene oxide unit"). In the case of a polymer chain having two or more types of alkylene oxide units, those alkylene oxide units may form a block polymer or a random polymer.

Examples of the oxyalkylene chain include a polymer chain having an ethylene oxide unit, a polymer chain having a propylene oxide unit, a polymer chain having an ethylene oxide unit and a propylene oxide unit, a polymer chain composed of an ethylene oxide unit, a polymer chain composed of a propylene oxide unit, a polymer chain composed of a butylene oxide unit, a polymer chain composed of a tetramethylene oxide unit, a polymer chain composed of an ethylene oxide unit and a propylene oxide unit, and a polymer chain composed of a propylene oxide unit and a butylene oxide unit. A polymer chain having an ethylene oxide unit, a polymer chain having a propylene oxide unit, a polymer chain having an ethylene oxide unit and a propylene oxide unit, a polymer chain composed of a propylene oxide unit, and a polymer chain composed of an ethylene oxide unit and a propylene oxide unit are preferred, and a polymer chain composed of a propylene oxide unit is particularly preferred. Further, when the polymer A has a polymer chain containing an ethylene oxide unit, the content of the ethylene oxide unit with respect to the total mass of the polymer A is preferably from 0.1 to 30% by mass, and more preferably from 10 to 20% by mass. When the content of the ethylene oxide unit in the polymer A is equal to or more than the above lower limit value, it is preferred from the viewpoint of faster curability, and when the content is equal to or less than the above upper limit value, it is preferred from the viewpoint of easily lowering the viscosity. When the polymer A has a polymer chain having an ethylene oxide unit and a propylene oxide unit, or a polymer chain composed of an ethylene oxide unit and a propylene oxide unit, the content of the ethylene oxide unit with respect to the total mass of the polymer A is preferably from 0.1 to 30% by mass, and more preferably from 10 to 20% by mass. When the content of the ethylene oxide unit in the polymer A is equal to or more than the above lower limit value, it is preferred from the viewpoint of faster curability, and when the content is equal to or less than the above upper limit value, it is preferred from the viewpoint of easily lowering the viscosity. When the polymer A has a polymer chain having an ethylene oxide unit and a propylene oxide unit, the content of the propylene oxide unit with respect to the total mass of the polymer A is preferably from 50 to 99.9% by mass, and more preferably from 70 to 90% by mass.

The polymer A has an average of 2.00 or more terminal groups within one molecule (also referred to as the "average number of terminal groups"). A polymer having an average of 2.00 to 6.00 terminal groups within one molecule is more preferred, because the cured product exhibits higher tensile strength and better modulus and elongation. The terminal groups of the polymer A include any of the aforementioned reactive silicon group represented by the Formula (1), an unsaturated group, an isocyanate group, an amino group, and a hydroxyl group. The respective terminal groups may be the same as or different from each other.

The polymer A preferably has an average of 0.50 to 2.00 reactive silicon groups represented by the above Formula (1) per terminal group, and more preferably has an average of 0.60 to 1.94 reactive silicon groups. The crosslinking density due to a siloxane bond increases when it is equal to or more than the lower limit value of the above range, and a favorable cured product with a high modulus can be obtained.

The molecular weight distribution of the polymer A is preferably 1.80 or less. The molecular weight distribution is preferably small, more preferably from 1.00 to 1.60, still more preferably from 1.02 to 1.50, and particularly preferably from 1.04 to 1.40, since favorable elongation properties can be easily achieved, and the viscosity reduces to improve workability.

The Mn of the polymer A is preferably from 2,400 to 20,000, more preferably from 3,000 to 19,000, still more preferably from 3,000 to 18,000, and particularly preferably from 3,500 to 10,000. When it is equal to or more than the lower limit value of the above range, the elongation properties of the cured product are further improved. When it is equal to or less than the upper limit value of the above range, the viscosity is low and the workability is favorable.

Examples of methods for producing the polymer A include production methods according to the following methods (a) to (c).

Method (a): a method of converting a hydroxyl group of a precursor polymer into an alkenyloxy group having a carbon-carbon double bond at the molecular terminal and then reacting a silylating agent capable of introducing a reactive silicon group - SiR¹ₐX¹₃₋ₐ represented by the above Formula (1) into the carbon-carbon double bond at the molecular terminal of the alkenyloxy group to convert the alkenyloxy group into a group having the reactive silicon group represented by the above Formula (1);

Method (b): a method of reacting a hydroxyl group of a precursor polymer with a silylating agent having a reactive silicon group represented by the above Formula (1) and a functional group capable of reacting with the hydroxyl group to convert the hydroxyl group into a group having the reactive silicon group represented by the above Formula (1);

Method (c): a method of converting a hydroxyl group of a precursor polymer into a group having an isocyanate group, and then reacting a silylating agent having a reactive silicon group represented by the above Formula (1) and a functional group capable of reacting with the isocyanate group to convert the hydroxyl group into a group having the reactive silicon group represented by the above Formula (1).

In the method (a), a precursor polymer is first produced. The precursor polymer can be produced by polymerizing an initiator and an alkylene oxide in the presence of a ring-opening polymerization catalyst.

The number of active hydrogens in the initiator is preferably from 2 to 6. It is preferably selected in accordance with the number of reactive silicon groups per molecule of the polymer A to be obtained.

One type of initiator may be used alone, or two or more types thereof may be used in combination.

The initiator preferably has a hydroxyl group as an active hydrogen-containing group.

Examples of the initiator having two hydroxyl groups include ethylene glycol, diethylene glycol, propylene glycol, dipropylene glycol, triethylene glycol, tripropylene glycol, neopentyl glycol, 1,4-butanediol, 1,6-hexanediol, and low molecular weight polyoxypropylene glycols.

Examples of the initiator having three hydroxyl groups include glycerin, trimethylolpropane, trimethylolethane, and low molecular weight polyoxypropylene triols.

Examples of the initiator having 4 or more hydroxyl groups include pentaerythritol, sucrose, sorbitol, dipentaerythritol, trehalose and diglycerin.

The alkylene oxide is selected in accordance with structural units of the polyoxyalkylene chain of the precursor polymer and the polymer A to be obtained.

Examples of the alkylene oxide include ethylene oxide, propylene oxide, 1,2-butylene oxide and 2,3-butylene oxide. Of these, ethylene oxide and propylene oxide are preferred, and propylene oxide is more preferred.

Examples of the ring-opening polymerization catalyst include a double metal cyanide complex and an alkali metal hydroxide (potassium hydroxide or the like).

A double metal cyanide complex is preferably used because the molecular weight distribution of the precursor polymer tends to be small and the total degree of unsaturation of the precursor polymer tends to be small.

A conventionally known compound can be used as the double metal cyanide complex. For example, compounds and production methods disclosed in International Patent Publication No. 2003/062301, International Patent Publication No. 2004/067633, Japanese Unexamined Patent Application, First Publication No. 2004-269776, Japanese Unexamined Patent Application, First Publication No. 2005-15786, International Patent Publication No. 2013/065802 and Japanese Unexamined Patent Application, First Publication No. 2015-010162 can be used.

The double metal cyanide complex is preferably a double metal cyanide complex in which glyme or t-butyl alcohol as an organic ligand is coordinated to the catalyst skeleton. The catalyst skeleton is more preferably Zn₃[Co(CN)₆]₂ (that is, a zinc hexacyanocobaltate complex). In particular, a double metal cyanide complex using t-butyl alcohol as an organic ligand is preferred.

When the polyoxyalkylene chains of the precursor polymer and polymer A to be obtained are random copolymer chains, a method of producing the precursor polymer by polymerizing an alkylene oxide including propylene oxide with an initiator in the presence of a double metal cyanide complex is preferred.

For example, a method of obtaining the precursor polymer by reacting a mixture of ethylene oxide and propylene oxide with an initiator in the presence of a double metal cyanide complex is preferred.

When the polyoxyalkylene chains of the precursor polymer and polymer A to be obtained have a block chain or random copolymer chain composed of an oxyalkylene group and a block chain composed of an oxyethylene group, a method of producing the precursor polymer by polymerizing an alkylene oxide with an initiator in the presence of a double metal cyanide complex and further polymerizing ethylene oxide in the presence of an alkali metal hydroxide is preferred.

For example, a method of obtaining the precursor polymer by polymerizing propylene oxide with an initiator in the presence of a double metal cyanide complex and then polymerizing ethylene oxide in the presence of an alkali metal hydroxide is preferred.

Alternatively, a method of obtaining the precursor polymer by reacting a mixture of ethylene oxide and propylene oxide with an initiator in the presence of a double metal cyanide complex and then polymerizing ethylene oxide in the presence of an alkali metal hydroxide is preferred.

In the precursor polymer, the presence of an oxyethylene group at least at the terminal of the polyoxyalkylene chain on the side of the reactive silicon group is preferred in view of further improving the curing in depth.

The Mn of the precursor polymer is preferably from 2,400 to 20,000, more preferably from 3,000 to 19,000, still more preferably from 3,000 to 18,000, and particularly preferably from 3,500 to 10,000. It is preferably set in accordance with the Mn of the polymer A to be obtained.

The Mw/Mn of the precursor polymer is preferably set so that the Mw/Mn of the polymer A is 2.00 or less. For example, the Mw/Mn of the precursor polymer is preferably 1.50 or less, more preferably 1.45 or less, and still more preferably 1.40 or less. The lower limit value is not particularly limited. The lower limit value is, for example, preferably 1.00 or more, and more preferably 1.01 or more. The above lower limit value and upper limit value can be arbitrarily combined. For example, the Mw/Mn of the precursor polymer is preferably from 1.00 to 2.00, more preferably from 1.00 to 1.50, still more preferably from 1.01 to 1.45, and particularly preferably from 1.01 to 1.40.

The total degree of unsaturation of the precursor polymer is preferably 0.10 meq/g or less, more preferably 0.05 meq/g or less, still more preferably 0.03 meq/g or less, and most preferably 0.01 meq/g or less. When it is equal to or less than the above upper limit value, the curing in depth is excellent. The lower limit value is not particularly limited. For example, the lower limit value is preferably 0.0001 meq/g or more. The total degree of unsaturation of the precursor polymer is preferably from 0.0001 to 0.10 meq/g, more preferably from 0.0001 to 0.05 meq/g, still more preferably from 0.0001 to 0.03 meq/g, and most preferably from 0.0001 to 0.01 meq/g.

Subsequently, an alkali metal salt is caused to act upon the precursor polymer, followed by reaction with a halogenated hydrocarbon compound having a carbon-carbon double bond at the molecular terminal to convert a hydroxyl group of the precursor polymer into an alkenyloxy group having a carbon-carbon double bond at the molecular terminal.

Examples of the alkali metal salt include sodium hydroxide, sodium alkoxide, potassium hydroxide, potassium alkoxide, lithium hydroxide, lithium alkoxide, cesium hydroxide, and cesium alkoxide.

From the viewpoints of ease of handling and solubility, sodium hydroxide, sodium methoxide, sodium ethoxide, potassium hydroxide, potassium methoxide and potassium ethoxide are preferred, and sodium methoxide and potassium ethoxide are more preferred. Sodium methoxide is particularly preferred in view of availability.

The alkali metal salt may be used in a state of being dissolved in a solvent.

As the halogenated hydrocarbon compound having a carbon-carbon double bond at the molecular terminal, one or both of a halogenated hydrocarbon compound containing a carbon-carbon double bond at the molecular terminal and a halogenated hydrocarbon compound containing a carbon-carbon triple bond can be used.

Examples of the halogenated hydrocarbon compound containing a carbon-carbon double bond at the molecular terminal include vinyl chloride, allyl chloride, methallyl chloride, vinyl bromide, allyl bromide, methallyl bromide, vinyl iodide, allyl iodide, and methallyl iodide. Allyl chloride and methallyl chloride are preferred.

Examples of the halogenated hydrocarbon compound containing a carbon-carbon triple bond include propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Propargyl chloride, propargyl bromide and propargyl iodide are preferred.

Two or more types of halogenated hydrocarbon compounds having a carbon-carbon double bond or triple bond at the molecular terminal may be used in combination.

Subsequently, a silylating agent capable of introducing a reactive silicon group - SiR¹ₐX¹₃₋ₐ represented by the above Formula (1) into the double bond at the molecular terminal of the alkenyloxy group is reacted to convert the alkenyloxy group into a group having the reactive silicon group represented by the above Formula (1). Examples of the silylating agent include a compound having both a group capable of forming a bond by reacting with an unsaturated group (for example, a sulfanyl group) and a reactive silicon group represented by the above Formula (1), and a hydrosilane compound (for example, HSiR¹ₐX¹₃₋ₐ, provided that X¹, R¹, and a are the same as those defined in the aforementioned Formula (1)). More specifically, for example, dimethoxymethylsilane, diethoxymethylsilane, dimethoxyethylsilane, methyldiisopropoxysilane, (α-chloromethyl)dimethoxysilane, (α-chloromethyl)diethoxysilane, trimethoxysilane, triethoxysilane, triisopropoxysilane, tris(2-propenyloxy)silane, triacetoxysilane, and 3-mercaptopropyltrimethoxysilane can be exemplified. Trimethoxysilane, dimethoxymethylsilane, and diethoxymethylsilane are preferred, and dimethoxymethylsilane is more preferred, from the viewpoints of high activity and favorable curability.

In the method (b), a silylating agent is reacted with the precursor polymer described in the method (a). It is preferable to use an isocyanate silane compound represented by the following Formula (3) as the silylating agent.

OCN-(CH₂)ₙ-SiR¹ₐX¹₃₋ₐ Formula (3)

-SiR¹ₐX¹₃₋ₐ in the above Formula (3) is the same as defined in the above Formula (1). n is an integer from 1 to 8, and preferably from 1 to 3.

By a reaction between the hydroxyl group of the precursor polymer and the above isocyanate silane compound, the hydroxyl group of the precursor polymer is converted into a terminal group having a urethane bond (-O-C(=O)NH-) and -SiRₐX₃₋ₐ, which is represented by -O-C(=O)NH-(CH₂)ₙ-SiRₐX₃₋ₐ.

Examples of the isocyanate silane compound include 3-isocyanatopropyltrimethoxysilane, 3-isocyanatopropyltriethoxysilane, isocyanatomethyltrimethoxysilane, isocyanatomethyltriethoxysilane, 3-isocyanatopropylmethyldimethoxysilane, 3-isocyanatopropylmethyldiethoxysilane, isocyanatomethylmethyldimethoxysilane, and isocyanatomethylmethyldiethoxysilane.

As the isocyanate silane compound, 3-isocyanatopropyltrimethoxysilane, 3-isocyanatopropyltriethoxysilane, 3-isocyanatopropylmethyldimethoxysilane, isocyanatomethylmethyldimethoxysilane and isocyanatomethyltrimethoxysilane are preferred because of their reactivity with the precursor polymer and ease of handling.

The reactive silicon group is introduced into the precursor polymer by reacting the active hydrogen of the precursor polymer with the isocyanate group of the isocyanate silane compound represented by the Formula (3).

When the active hydrogen-containing group of the precursor polymer is a hydroxyl group, a polymer A in which the reactive silicon group is bonded to a polyoxyalkylene chain (-(R⁵O)ₘ-, where R⁵ represents an alkylene group and m represents the number of moles of an oxyalkylene group) via a urethane bond and an organic group is obtained. In other words, a connecting structure represented by - (R⁵O)ₘ-C(=O)NH-(CH₂)ₙ-SiR¹ₐX¹₃₋ₐ is formed.

This reaction may be carried out in the presence of a urethanization catalyst. The urethanization catalyst is not particularly limited, and a known urethanization catalyst can be used as appropriate. Examples thereof include organotin compounds such as dibutyltin dilaurate and dioctyltin dilaurate, metal catalysts such as bismuth compounds, and base catalysts such as organic amines. The reaction temperature is preferably from 20 to 200°C, and more preferably from 50 to 150°C. Further, the urethanization reaction is preferably carried out under an inert gas atmosphere. Nitrogen is preferred as the inert gas.

A molar ratio of the total number of isocyanate groups in the isocyanate silane compound represented by the Formula (3) with respect to the total number of active hydrogens in the precursor polymer is preferably set in accordance with the number of reactive silicon groups per molecule of the polymer A to be obtained. The isocyanate silane compound represented by the Formula (3) is reacted so that the number of reactive silicon groups per molecule of the polymer A to be obtained is at least 1.8 or more.

For example, when the active hydrogen-containing group in the precursor polymer is a hydroxyl group, NCO/OH representing a molar ratio of the total number of isocyanate groups (NCO) in the isocyanate silane compound represented by the Formula (3) with respect to the total number of active hydrogens in the precursor polymer is preferably from 0.7 to 1.0, more preferably from 0.8 to 1.0, and still more preferably from 0.9 to 1.0. When it is equal to or more than the lower limit value of the above range, the strength of the cured product is excellent, and when it is equal to or less than the upper limit value, the elongation of the cured product is excellent.

In the method (c), a polyisocyanate compound is reacted with the hydroxyl group of the precursor polymer to convert the hydroxyl group into a monovalent organic group containing an isocyanate group (hereinafter also referred to as an "isocyanate-containing group") and having a urethane bond (-O-C(=O)NH-) on the terminal side of the bond with the precursor polymer. Subsequently, a silylating agent having a reactive silicon group represented by the above Formula (1) and a functional group capable of reacting with an isocyanate group is reacted with the isocyanate-containing group to form a terminal group which is a monovalent organic group having one or more urethane bonds (-O-C(=O)NH-) and a silylating agent residue that has reacted with an isocyanate group (hereinafter also referred to as a "urethane bond and reactive silicon group-containing group").

Hereinafter, the method (c) will be described assuming that the above polyisocyanate compound is a diisocyanate compound represented by the following Formula (4), and that the silylating agent having a reactive silicon group represented by the above Formula (1) and a functional group capable of reacting with an isocyanate group is a compound represented by the following Formula (5), but is not limited thereto.

OCN-R³-NCO Formula (4)

R³ in the above Formula (4) represents a divalent organic group.

W-R⁴-SiR¹ₐX¹₃₋ₐ Formula (5)

W in the above Formula (5) is a functional group capable of reacting with a monovalent isocyanate group (a group having one or more active hydrogens), R⁴ is a divalent organic group, and -SiR¹ₐX¹₃₋ₐ is the same as defined in the above Formula (1).

For the precursor polymer, the precursor polymer described in the method (a) can be used. When the polyisocyanate compound represented by the above Formula (4) is reacted with the hydroxyl group in the precursor polymer, the above isocyanate-containing group becomes a group represented by -O-C(=O)NH-R³-NCO. When the above isocyanate-containing group and the silylating agent represented by the above Formula (5) are reacted, the above urethane bond and reactive silicon group-containing group become a group represented by -O-C(=O)NH-R³-NHC(=O)-W'-R⁴-SiR¹ₐX¹₃₋ₐ (provided that W' is a divalent group obtained by removing one active hydrogen from W). For example, when W is a hydroxyl group, the above urethane bond and reactive silicon group-containing group are a group represented by -O-C(=O)NH-R³-NHC(=O)-O-R⁴-SiR¹ₐX¹₃₋ₐ. In this case, the above urethane bond and reactive silicon group-containing group have two urethane bonds. Further, for example, when W is an amino group (-NH₂), the above urethane bond and reactive silicon group-containing group are a group represented by -O-C(=O)NH-R³-NHC(=O)-NH-R⁴-SiR¹ₐX¹₃₋ₐ.

R³ is preferably a divalent organic group having 2 to 20 carbon atoms, and examples thereof include an alkylene group, a cycloalkylene group, a bicycloalkylene group, a monocyclic or polycyclic divalent aromatic hydrocarbon group, a divalent group obtained by removing two hydrogen atoms in a cycloalkane having an alkyl group as a substituent, a divalent group obtained by removing two hydrogen atoms in an aromatic hydrocarbon having an alkyl group as a substituent, a divalent group obtained by removing two hydrogen atoms in two or more cycloalkanes bonded via an alkylene group and which may have an alkyl group as a substituent, and a divalent group obtained by removing two hydrogen atoms in two or more aromatic hydrocarbons bonded via an alkylene group and which may have an alkyl group as a substituent.

Examples of the diisocyanate compounds represented by the above Formula (4) and other polyisocyanate compounds include aromatic polyisocyanates, non-yellowing aromatic polyisocyanates (compounds that do not have isocyanate groups directly bonded to carbon atoms constituting an aromatic ring), aliphatic polyisocyanates and alicyclic polyisocyanates, and urethane modified products, biuret modified products, allophanate modified products, carbodiimide modified products and isocyanurate modified products, which are obtained from the above polyisocyanates.

Examples of the aromatic polyisocyanate include naphthalene-1,5-diisocyanate, polyphenylenepolymethylene polyisocyanate, 4,4'-diphenylmethane diisocyanate, 2,4-tolylene diisocyanate, and 2,6-tolylene diisocyanate.

Examples of the non-yellowing aromatic polyisocyanate include xylylene diisocyanate and tetramethylxylylene diisocyanate.

Examples of the aliphatic polyisocyanate include hexamethylene diisocyanate, 2,2,4-trimethyl-hexamethylene diisocyanate, and 2,4,4-trimethyl-hexamethylene diisocyanate.

Examples of the alicyclic polyisocyanate include isophorone diisocyanate and 4,4'-methylenebis(cyclohexyl isocyanate).

As the polyisocyanate compound, those having two isocyanate groups are preferred, hexamethylene diisocyanate, isophorone diisocyanate, 4,4'-diphenylmethane diisocyanate, 2,4-tolylene diisocyanate, and 2,6-tolylene diisocyanate are preferred, and tolylene diisocyanate is more preferred because tensile strength of the cured product can be easily obtained. One type of the polyisocyanate compound may be used, or two or more types thereof may be used in combination.

R⁴ in the silylating agent having a functional group capable of reacting with an isocyanate group represented by the Formula (5) and -SiR¹ₐX¹₃₋ₐ is preferably a divalent organic group having 1 to 20 carbon atoms, more preferably a group obtained by removing two hydrogen atoms from an aromatic hydrocarbon having 6 to 10 carbon atoms, a group obtained by removing two hydrogen atoms from an aromatic hydrocarbon having 6 to 10 carbon atoms and substituted with an alkyl group having 1 to 4 carbon atoms, a group obtained by removing two hydrogen atoms from a cyclic hydrocarbon having 3 to 10 carbon atoms, or a group obtained by removing two hydrogen atoms from a linear hydrocarbon having 1 to 12 carbon atoms, still more preferably a group obtained by removing two hydrogen atoms from a linear hydrocarbon having 1 to 8 carbon atoms, and particularly preferably a group obtained by removing two hydrogen atoms from a linear hydrocarbon having 1 to 6 carbon atoms.

W is preferably a group having 1 or 2 active hydrogens selected from a hydroxyl group, a carboxy group, a sulfanyl group, an amino group, and an amino group in which one hydrogen atom is substituted with an alkyl group having 1 to 6 carbon atoms, preferably a hydroxyl group, a sulfanyl group, an amino group, a methylamino group, an ethylamino group and a butylamino group, and more preferably a hydroxyl group, an amino group, a methylamino group, an ethylamino group and a butylamino group.

As the number of groups having the above reactive silicon group to be introduced into the polymer A, as described above, it is preferably those obtained by introducing an average of 0.50 to 2.00, more preferably 0.60 to 1.94, reactive silicon groups per one terminal group, because it is easy to achieve both a high modulus and favorable elongation properties of the cured product.

A silylation rate of the polymer A is preferably from 50 to 100 mol%, and more preferably from 60 to 98 mol%. When the silylation rate is equal to or more than the lower limit value of the above range, the cured product exhibits excellent tensile strength and a high modulus.

When the curable composition contains two or more types of polymer A, only the average silylation rate of the entire polymer A needs to be within the above range.

When producing the polymer A, in addition to the precursor polymer (main product) in which polyoxyalkylene is added to the initiator, a diol precursor polymer (by-product) in which polyoxyalkylene is added to moisture in the reaction system may be produced. Therefore, an oxyalkylene polymer having two terminal groups within one molecule is produced from the by-product. As a result, the average number of terminal groups within one molecule of the polymer A (average number of terminal groups) is calculated as follows: 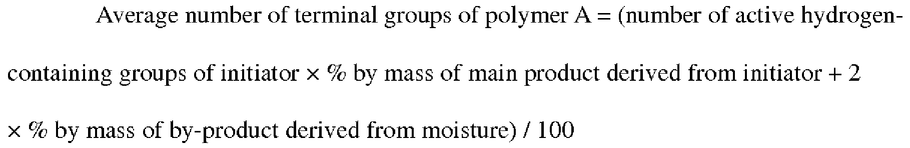 Average number of terminal groups of polymer A = (number of active hydrogen-containing groups of initiator × % by mass of main product derived from initiator + 2 × % by mass of by-product derived from moisture) / 100

The polymer A may be an oxyalkylene polymer formed via one or more organic groups represented by the Formula (i).

In other words, the polymer A may be an oxyalkylene polymer produced by the method (b) or method (c). When the polymer A is an oxyalkylene polymer formed via one or more organic groups represented by the Formula (i), it is more preferable because the organic groups aggregate with each other through interactions derived from hydrogen bonding to form hard segments, resulting in a higher modulus during curing compared to those without organic groups.

### <Polymer B>

The polymer B is an oxyalkylene polymer that has an average of 1.00 to 1.30 terminal groups within one molecule and has a reactive silicon group which is formed via one or more organic groups represented by the following Formula (i) and is represented by the following Formula (2), and has a number average molecular weight of 5,000 or less. The terminal groups of the polymer B include a reactive silicon group, an unsaturated group, an isocyanate group, an amino group, or a hydroxyl group.

-C(=O)NH- Formula (i)

-SiR²_{b}X²_{3-b} Formula (2)

One molecular terminal of the polymer B has a structure derived from a residue of an initiator, and the other molecular terminal has a structure derived from the above terminal group. The curable composition of the present embodiment may contain two or more types of polymer B. The polymer B acts as a reactive plasticizer, reducing the viscosity of the curable composition while achieving a high-modulus cured product with excellent bleed out suppression capabilities.

Examples of the main chain of the polymer B are the same as those of the main chain of the polymer A. Further, R² and X² in the Formula (2) are the same as the examples of R¹ and X¹ in the polymer A. The range of b in the Formula (2) is the same as a in the Formula (1).

An oxyalkylene polymer formed via one or more organic groups represented by the Formula (i) can also be said as an oxyalkylene polymer containing one or more organic groups represented by the Formula (i).

In the polymer B, the organic group (i) present between the polyoxyalkylene chain and the reactive silicon group is an organic group derived from the silylating agent in the method (b) having a reactive silicon group represented by the Formula (1) and a functional group capable of reacting with a hydroxyl group , or the silylating agent used in the method (c) having a reactive silicon group represented by the above Formula (2) and a functional group capable of reacting with an isocyanate group. The polymer B contains one or two organic groups (i).

The organic group (i) is a divalent group derived from a urethane bond or a urea bond. When the isocyanate silane compound represented by the Formula (3) is used as the silylating agent, the number of organic groups (i) is one.

The organic group (i) preferably forms a urethane bond (-O-C(=O)NH-, where - O- represents an oxygen atom at the terminal of the polyoxyalkylene chain) with the polyoxyalkylene chain. That is, in the polymer B, it is preferable that one organic group (i) is present between the polyoxyalkylene chain and the reactive silicon group. When the polymer B is produced by the above-mentioned method (b), the number of organic groups represented by the Formula (i) contained in the polymer B is one. When the polymer B is produced by the method (b), the polymer B with a high silylation rate is obtained. Since a curable composition containing such polymer B as a reactive plasticizer exhibits high reactivity during curing, the cured product is less likely to bleed out. Further, when produced by the method (b), the polymer B with a narrow molecular weight distribution is obtained. Since the viscosity of the polymer is suppressed, the workability is improved.

When the isocyanate silane compound represented by the Formula (3) contains one isocyanate group and one reactive silicon group, respectively, the number of reactive silicon groups per molecule and the number of groups (i) per molecule of the polymer B is the same.

It is preferable to use the method (b), that is, a method of reacting a precursor polymer with an isocyanate silane compound represented by the Formula (3), as a method for producing the polymer B from the viewpoint of not producing impurities having unsaturated groups as by-products. Moreover, it is also preferable in that the production steps are fewer. The total degree of unsaturation of the polymer B obtained by this method is equal to or less than the total degree of unsaturation of the precursor polymer. More specifically, the total degree of unsaturation of the polymer B is preferably 0.10 meq/g or less, more preferably 0.05 meq/g or less, still more preferably 0.03 meq/g or less, and most preferably 0.01 meq/g or less. When it is equal to or less than the above upper limit value, the strength of the cured product is further improved. The lower limit value is not particularly limited. For example, the lower limit value is preferably 0.0001 meq/g or more. The total degree of unsaturation of the polymer B is preferably from 0.0001 to 0.10 meq/g, more preferably from 0.0001 to 0.05 meq/g, still more preferably from 0.0001 to 0.03 meq/g, and most preferably from 0.0001 to 0.01 meq/g.

With regard to the polymer B, those having an average of more than 0.40 but not more than 1.00 reactive silicon groups represented by the above Formula (2) per terminal group are preferred, those having an average of more than 0.50 but not more than 1.00 reactive silicon groups are more preferred, those having an average of 0.51 to 0.97 reactive silicon groups are still more preferred, and those having an average of 0.52 to 0.95 reactive silicon groups are particularly preferred. When it is equal to or more than the lower limit value of the above range, the cured product exhibits better tensile strength, a higher modulus, and excellent bleed out suppression capabilities. When it is equal to or less than the upper limit value of the above range, the elongation of the cured product is further improved.

The Mn of the polymer B is preferably from 500 to 5,000, more preferably from 600 to 4,000, and still more preferably from 700 to 3,500. When it is equal to or more than the lower limit value of the above range, the cured product exhibits better tensile strength and a higher modulus. When it is equal to or less than the upper limit value of the above range, the viscosity is suppressed, and the workability is further improved.

In general, the smaller the molecular weight of the plasticizer, the lower the viscosity of the curable composition, and also accordingly the lower the modulus. On the other hand, since the polymer B of the present embodiment has a reactive silicon group at the terminal group, a high modulus can be maintained with respect to the viscosity of the curable composition compared to other plasticizers.

The molecular weight distribution of the polymer B is preferably 1.80 or less. From the viewpoint of reducing viscosity, the molecular weight distribution is preferably small, more preferably from 1.00 to 1.60, still more preferably from 1.02 to 1.50, and particularly preferably from 1.04 to 1.40.

The polymer B can be obtained by introducing an average of more than 0 but not more than 1.0 of the aforementioned reactive silicon groups per terminal group into a precursor polymer having one terminal group, which is a hydroxyl group.

The residue of an initiator at one molecular terminal of the polymer B is preferably R¹⁰-O- (R¹⁰ is a monovalent hydrocarbon group). R¹⁰ is preferably a branched or linear alkyl group having 1 to 20 carbon atoms, more preferably a branched or linear alkyl group having 1 to 10 carbon atoms, still more preferably a branched or linear alkyl group having 1 to 4 carbon atoms, and particularly preferably a methyl group, an ethyl group, an isopropyl group, an n-propyl group, an n-butyl group or a t-butyl group.

The precursor polymer for the polymer B is preferably produced in the same manner as the method for the polymer A, with the exception that an initiator having one active hydrogen is used. Two or more types of initiators may be used in combination.

The active hydrogen-containing group of the initiator is preferably a hydroxyl group. The precursor polymer is preferably a polymer having one hydroxyl group as a terminal group.

As an initiator having one hydroxyl group, a monohydric alcohol having a linear or branched hydrocarbon group is preferred. Specific examples thereof include methyl alcohol, ethyl alcohol, 1-propyl alcohol, 2-propyl alcohol, n-butyl alcohol, isobutyl alcohol, 2-butyl alcohol, t-butyl alcohol, 2-ethylhexanol, decyl alcohol, lauryl alcohol, tridecanol, cetyl alcohol, stearyl alcohol, oleyl alcohol, and low molecular weight polyoxyalkylene monools.

The silylation rate of the polymer B is preferably more than 50 mol% but not more than 100 mol%, more preferably from 70 to 100 mol%, and still more preferably from 90 to 100 mol%. When the silylation rate of the polymer B is equal to or more than the lower limit value of the above range, the cured product exhibits better tensile strength, a higher modulus, and is unlikely to cause bleed out.

When the curable composition contains two or more types of polymer B, only the average silylation rate of the entire polymer B needs to be within the above range.

When producing the polymer B, in addition to the precursor polymer (main product) in which polyoxyalkylene is added to the monool initiator, a diol precursor polymer (by-product) in which polyoxyalkylene is added to moisture in the reaction system may be produced. For this reason, an oxyalkylene polymer that: has 2 terminal groups within one molecule; and has a reactive silicon group which is formed via one or more organic groups represented by the following Formula (i) and is represented by the above Formula (2) is produced from the by-product. As a result, the average number of terminal groups within one molecule of the polymer B may be more than 1.00. The average number of terminal groups within one molecule (average number of terminal groups) is calculated as follows: 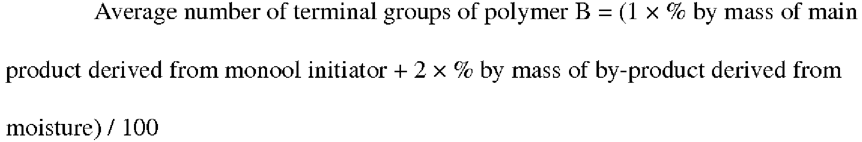 Average number of terminal groups of polymer B = (1 × % by mass of main product derived from monool initiator + 2 × % by mass of by-product derived from moisture) / 100

Since the Mw/Mn ratio increases and the viscosity increases, leading to reduced workability as the amount of moisture in the reaction system increases, the average number of terminal groups of the polymer B is from 1.00 to 1.30, preferably from 1.00 to 1.20, and more preferably from 1.00 to 1.10.

### <Polymer C>

The curable composition of the present embodiment may contain a vinyl polymer (hereinafter referred to as a "polymer C") having an average of one or more reactive silicon groups represented by the above Formula (1) within one molecule. The curable composition of the present embodiment may contain two or more types of polymer C. The polymer C contributes to weather resistance, water resistance, and the like.

The reactive silicon group in the polymer C may be introduced at the terminal of the main chain, at the side chain, or at both the terminal of the main chain and the side chain.

The average number of reactive silicon groups per molecule of the polymer C is preferably 0.8 or more. It is preferably 1.0 or more, and more preferably 1.2 or more, from the viewpoint of tensile strength after curing. It is preferably 4.0 or less, and more preferably 3.0 or less, from the viewpoint of favorable elongation of the cured product. It is preferably from 0.8 to 4.0, more preferably from 1.0 to 4.0, and still more preferably from 1.2 to 3.0.

The average number of reactive silicon groups per molecule of the polymer C is calculated by a formula: "concentration of reactive silicon groups in polymer C [mol/g] × number average molecular weight of polymer C". The concentration of reactive silicon groups in the polymer C [mol/g] can be measured by NMR.

As a monomer constituting the main chain of the polymer C, for example, conventionally known monomers described in Japanese Examined Patent Application, Second Publication No. Hei 3-14068, Japanese Unexamined Patent Application, First Publication No. Hei 6-211922, and Japanese Unexamined Patent Application, First Publication No. Hei 11-130931 can be used.

Examples of the monomer containing a reactive silicon group and an unsaturated group to be copolymerized with the above monomer include vinyldimethoxymethylsilane, vinyldiethoxymethylsilane, vinylmethyldichlorosilane, vinyltrimethoxysilane, vinyltriethoxysilane, vinyltrichlorosilane, tris(2-methoxyethoxy)vinylsilane, 3-(dimethoxymethylsilyl)propyl (meth)acrylate, 3-(trimethoxysilyl)propyl (meth)acrylate, and 3-(triethoxysilyl)propyl (meth)acrylate. Two or more types of these monomers may be used.

The content of the (meth)acrylate monomer is preferably 50% by mass or more, more preferably 70% by mass or more, and may be 100% by mass, with respect to all the monomers constituting the polymer C.

The polymer C can be polymerized by conventionally known polymerization methods described in Japanese Unexamined Patent Application, First Publication No. 2006-257405, Japanese Unexamined Patent Application, First Publication No. 2006-37076, Japanese Unexamined Patent Application, First Publication No. 2008-45059, and the like. Conventionally known materials can be used as secondary materials such as initiators necessary for polymerization, and reaction conditions such as reaction temperature and reaction pressure can also be appropriately selected.

Examples of the polymerization method include a polymerization method using a radical polymerization initiator by solution polymerization, emulsion polymerization, suspension polymerization, or bulk polymerization, and a living radical polymerization method. As the living radical polymerization method, a method using a cobalt porphyrin complex as shown in Journal of American Chemical Society (J. Am. Chem. Soc., 1994, Vol. 116, p. 7943), a method using a nitroxide radical as shown in Published Japanese Translation No. 2003-500378 of the PCT International Publication, and an atom transfer radical polymerization (Atom Transfer Radical Polymerization: ATRP) method using an organic halide, a sulfonyl halide compound or the like as an initiator and a transition metal complex as a catalyst as shown in Japanese Unexamined Patent Application, First Publication No. Hei 11-130931 can be exemplified. Polymers obtained by living radical polymerization tend to have narrow molecular weight distributions and low viscosities.

A commercially available polymer C can also be used. As the commercially available products, for example, the XMAP series (names of products manufactured by Kaneka Corporation), the ARUFON US-6000 series (for example, US-6110, US-6120, US-6170, and the like, all of which are names of products manufactured by Toagosei Co., Ltd.), the Actflow NE series (for example, NE-1000 and NE-3000, both of which are names of products manufactured by Soken Chemical & Engineering Co., Ltd.), and the like can be used.

The Mn of the polymer C is preferably from 500 to 100,000, more preferably from 800 to 80,000, and still more preferably from 1,000 to 60,000. When it is equal to or more than the lower limit value of the above range, the elongation properties and weather resistance of the cured product tend to be excellent, and when it is equal to or less than the upper limit value, the workability is further improved.

The molecular weight distribution of the polymer C is preferably 4.0 or less, and more preferably 3.0 or less. When it is equal to or less than the above upper limit value, the workability is further improved.

### <Curable composition>

The curable composition is obtained by mixing the polymer A, the polymer B, and other necessary components.

The content of the polymer A with respect to the total mass of the curable composition is preferably from 1 to 90% by mass, more preferably from 10 to 80% by mass, and still more preferably from 20 to 70% by mass. When it is within the above range, the cured product exhibits better tensile strength, and the elongation properties are further improved.

The content of the polymer B with respect to the total mass of the curable composition is preferably from 1 to 70% by mass, more preferably from 1 to 60% by mass, and still more preferably from 1 to 50% by mass. When it is equal to or more than the lower limit value of the above range, the viscosity of the curable composition decreases and the elongation properties are further improved. When it is equal to or less than the upper limit value of the above range, the cured product exhibits better tensile strength and a higher modulus.

The total content of the polymer A and the polymer B with respect to the total mass of the curable composition is preferably from 2 to 70% by mass, more preferably from 3 to 60% by mass, and still more preferably from 4 to 50 % by mass. When it is equal to or less than the upper limit value of the above range, the viscosity of the curable composition tends to decrease. When it is equal to or more than the lower limit value of the above range, the curability is favorable, and the cured product exhibits excellent tensile strength and a high modulus.

The content of the polymer B is preferably from 20 to 80 parts by mass, more preferably from 25 to 75 parts by mass, and still more preferably from 30 to 70 parts by mass, with respect to 100 parts by mass of the total content of the polymer A and the polymer B. When it is equal to or more than the lower limit value of the above range, the viscosity of the curable composition decreases and the tensile strength of the cured product is further improved. When it is equal to or less than the upper limit value of the above range, the tensile strength and modulus are excellent.

When the curable composition contains the polymer C, the content of the polymer C with respect to a total of 100 parts by mass of the polymer A is preferably from 1 to 600 parts by mass, more preferably from 5 to 500 parts by mass, and still more preferably from 10 to 300 parts by mass. When it is within the above range, the weather resistance of the cured product obtained from the curable composition is further improved.

### [Other components]

Examples of other components described above include curable compounds other than the polymers A to C such as epoxy resins, epoxy resin curing agents, curing catalysts (silanol condensation catalysts), fillers, plasticizers, thixotropic agents, stabilizers, adhesion-imparting agents, physical property modifiers, dehydrating agents, adhesion-imparting resins, reinforcing materials such as fillers, surface modifiers, flame retardants, foaming agents, solvents, and silicates.

Conventionally known components described in International Patent Publication No. 2013/180203, International Patent Publication No. 2014/192842, International Patent Publication No. 2016/002907, Japanese Unexamined Patent Application, First Publication No. 2014-88481, Japanese Unexamined Patent Application, First Publication No. 2015-10162, Japanese Unexamined Patent Application, First Publication No. 2015-105293, Japanese Unexamined Patent Application, First Publication No. 2017-039728, Japanese Unexamined Patent Application, First Publication No. 2017-214541 and the like can be used in combination without limitation as other components. Two or more types of each component may be used in combination.

The curable composition may be a one-component type in which all of the polymer and other components are blended in advance, sealed and stored, and cured by moisture in the air after application; or may be a two-component type in which a main agent composition containing at least a polymer having a reactive silicon group and a curing agent composition containing at least a curing catalyst are stored separately, and the curing agent composition and the main agent composition are mixed before use.

It is preferable that the one-component type curable composition does not contain water. It is preferable to dehydrate and dry the added components containing water in advance, or to dehydrate by reducing the pressure during addition and kneading.

In the two-component type curable composition, the curing agent composition may contain water. Although the main agent composition hardly gels even when it contains a small amount of water, it is preferable to dehydrate and dry the added components in advance from the viewpoint of storage stability.

A dehydrating agent may be added to the one-component type curable composition or the two-component type main agent composition in order to improve the storage stability.

### [Mechanism of action]

The curable composition of the present embodiment contains the polymer A and the polymer B; the polymer B contained in the composition is an oxyalkylene polymer that has one terminal group within one molecule and has a reactive silicon group represented by the Formula (2) which is formed via one or more organic groups represented by the following Formula (i) ; and the aforementioned terminal group includes the aforementioned reactive silicon group, an unsaturated group, an isocyanate group, an amino group, or a hydroxyl group, and has a number average molecular weight of 5,000 or less. This type of curable composition exhibits low viscosity, and the organic group (i) included in the polymer B forms a hard segment through interactions derived from hydrogen bonding. As a result, it is possible to obtain a cured product that exhibits a high modulus and is unlikely to cause bleed out. For this reason, it is particularly useful as an adhesive material that requires high tensile strength and bleed out suppression.

### [Applications]

As applications of the curable composition of the present embodiment, adhesives, sealants (for example, elastic sealants for construction, sealants for double glazing, sealants for rust prevention and waterproofing of glass edges, sealants for back surfaces of solar cells, building sealants, marine sealants, automobile sealants, and road sealants), and electrical insulating materials (insulating coating materials for electric wires and cables) are suitable.

In particular, it is suitable for applications that require favorable tensile strength and reduced bleed out in the cured product, and examples thereof include floor adhesives.

### Examples

The present invention will be specifically described below with reference to Examples, but the present invention is not limited by the following description.

### [Average number of terminal groups]

The average number of terminal groups of the polymer A was calculated using a formula: average number of terminal groups of polymer A = (number of hydroxyl groups of initiator × % by mass of main product derived from initiator + 2 × % by mass of by-product derived from moisture) / 100.

The average number of terminal groups of the polymer B was calculated using a formula: average number of terminal groups of polymer B = (1 × % by mass of main product derived from monool initiator + 2 × % by mass of by-product derived from moisture) / 100.

### [Number of reactive silicon groups]

The average number of reactive silicon groups was calculated by a formula:
"concentration of reactive silicon groups in polymer [mol/g] × number average molecular weight of polymer". The concentration of reactive silicon groups in the polymer [mol/g] was measured by NMR.

### [Silylation rate]

The number of reactive silicon groups per terminal group was calculated by a formula: number of reactive silicon groups / average number of terminal groups. The silylation rate was calculated by a formula: (number of reactive silicon groups per terminal group) × 100.

### [Number average molecular weight Mn and weight average molecular weight Mw of polyoxyalkylene polymer]

HLC-8420GPC (name of a product manufactured by Tosoh Corporation) was used as a measuring device. TSKgel Supermultipore HZ-M (name of a product manufactured by Tosoh Corporation) was used as a column, and tetrahydrofuran was used as a solvent. The number average molecular weight Mn and the weight average molecular weight Mw were determined by setting the sample pump at a flow rate of 0.350 mL/min, the reference pump at a flow rate of 0.350 mL/min, the detector temperature to 40°C and the collection time to 6 to 15 minutes, and analyzing the peaks appearing between collection times of 6 and 11 minutes. A calibration curve was produced using polystyrene as a reference material.

### [Tensile shear test]

A tensile shear test was performed in accordance with ISO 37: 2017 (corresponding to JIS K 6251: 2023).

A curable composition to be measured was filled into a mold having a thickness of 2 mm, cured at a temperature of 23°C and a humidity of 50% for 3 days, and further cured at a temperature of 50°C and a humidity of 65% for 4 days.

The obtained cured product was punched out using a test specimen preparation machine (sample punching machine (lever-type), manufactured by Toyo Seiki Seisaku-sho, Ltd.) equipped with a test specimen punching blade (dumbbell shape No. 3) in accordance with JIS K 6250: 2019, Section 8.3, to obtain a dumbbell shape No. 3 type test specimen shown in FIG. 1. This test specimen was subjected to a tensile test at a tensile rate of 500 mm/min using a Tensilon testing machine (TENSILON RTG-1310, manufactured by A & D Co., Ltd.), and the modulus which was the stress at 20% and 50% elongation (M20/M50, respectively, unit: N/mm²), the tensile strength (Tmax, unit: N/mm²) which was the maximum cohesive strength, and the maximum point elongation (elongation characteristics, unit: %) were measured.

Details of the above test specimen shown in FIG. 1 are as follows.

The total length L1 of the above test specimen was 100 mm, the length L2 of the narrow parallel portion was 20 mm, the length L3 from the narrow parallel portion to the end portion was 40 mm, and the length L4 from the narrow parallel portion to the wide parallel portion was 25 mm. The width W1 of the narrow parallel portion was 5 mm, and the width W2 of the wide parallel portion was 25 mm. The radius R1 of the shoulder portion was 11 mm, and the major radius R2 was 25 mm. The thickness of the dumbbell specimen was 2.0 mm.

### [Bleed out test]

The surface of the cured product obtained under the above curing conditions was traced with a metal spatula, and a case where the migration of a large amount of surface components to the spatula was observed was evaluated as "X", a case where the migration of a small amount was observed was evaluated as "Δ", and a case where no migration was observed was evaluated as "O". Since the migration of surface components leads to a loss of functionality, such as poor adhesion of the cured product to the base material, an evaluation of "O" is desirable in this test.

### [Compound viscosity measurement]

Samples formulated under the conditions in Tables 3 to 6 described later were placed in a deep-bottomed container capable of measuring viscosity, and before curing began, the viscosity (unit: Pa·s) was measured using an E-type viscometer (RE80 type (product name), manufactured by Toki Sangyo Co., Ltd.) under conditions of a measurement temperature of 25°C, a rotor No. 7, and a rotational frequency of 10 rpm. As a calibration standard solution, JS 14000 (product name, manufactured by Nippon Grease Co., Ltd.) was used. From the viewpoint of workability, compound viscosity is preferably 200 Pa·s or less, more preferably 180 Pa·s of less, and particularly preferably 160 Pa·s or less.

### [Polymer A and polymer B formulation viscosity measurement]

Only the members corresponding to the "polymer A" and "polymer B" in Tables 3 to 7 described later were blended and placed in a deep-bottomed container capable of measuring viscosity, and the viscosity (unit: Pa·s) was measured using an E-type viscometer (RE80 type (product name), manufactured by Toki Sangyo Co., Ltd.) under conditions of a measurement temperature of 25°C, a rotor No. 7, and a rotational frequency of 10 rpm. As a calibration standard solution, JS 14000 (product name, manufactured by Nippon Grease Co., Ltd.) was used. In Tables 3 to 6, the formulation viscosity measurement of polymer A and polymer B is described as "formulation viscosity."

### [Polymer synthesis]

The polymers shown in Tables 1 and 2 were synthesized using the following method. It should be noted that the number of Formula (i) in Tables 1 and 2 refers to the number of Formula (i) per reactive silicon group.

**[Table 1]**

| Polymer | Average number of terminal groups | Reactive silicon group structure | Number of reactive silicon groups | Number of reactive silicon groups per terminal group | Number of formula (i) | Number average molecular weight Mn | Molecular weight distribution Mw/Mn |
|---|---|---|---|---|---|---|---|
| Polymer A-1 | 2.00 | Trimethoxysilyl | 1.94 | 0.97 | 1 | 10,000 | 1.06 |
| Polymer A-2 | 2.00 | Methyldimethoxysilyl | 1.94 | 0.97 | 1 | 10,000 | 1.06 |
| Polymer A-3 | 2.00 | Trimethoxysilyl | 1.94 | 0.97 | 1 | 5,000 | 1.05 |
| Polymer A-4 | 2.00 | Trimethoxysilyl | 1.94 | 0.97 | 1 | 20,000 | 1.08 |
| Polymer A-5 | 2.90 | Trimethoxysilyl | 2.81 | 0.97 | 1 | 10,000 | 1.08 |
| Polymer A-6 | 5.60 | Trimethoxysilyl | 5.43 | 0.97 | 1 | 10,000 | 1.12 |

**[Table 2]**

| Polymer | Average number of terminal groups | Reactive silicon group structure | Number of reactive silicon groups | Number of reactive silicon groups per terminal group | Number of formula (i) | Number average molecular weight Mn | Molecular weight distribution Mw/Mn |
|---|---|---|---|---|---|---|---|
| Polymer B-1 | 1.03 | Trimethoxysilyl | 1.00 | 0.97 | 1 | 3,000 | 1.04 |
| Polymer B-2 | 1.02 | Trimethoxysilyl | 0.99 | 0.97 | 1 | 1,500 | 1.03 |
| Polymer B-3 | 1.01 | Trimethoxysilyl | 0.98 | 0.97 | 1 | 700 | 1.02 |
| Polymer B-4 | 1.05 | Trimethoxysilyl | 1.02 | 0.97 | 1 | 5,000 | 1.05 |
| Polymer B-5 | 1.03 | Trimethoxysilyl | 0.91 | 0.88 | 2 | 3,000 | 1.18 |
| Polymer B-6 | 1.03 | Methyldimethoxysilyl | 1.00 | 0.97 | 1 | 3,000 | 1.04 |
| Polymer B-7 | 1.03 | Methyldimethoxysilyl | 0.88 | 0.85 | 0 | 3,000 | 1.04 |
| Polymer B-8 | 1.09 | Trimethoxysilyl | 1.06 | 0.97 | 1 | 7,500 | 1.05 |
| Polymer B-9 | 1.09 | Trimethoxysilyl | 0.96 | 0.88 | 2 | 7,500 | 1.23 |
| Polymer B-10 | 1.09 | Dimethoxysilyl | 1.06 | 0.97 | 1 | 7,500 | 1.05 |

### (Synthesis Example 1: polymer A-1)

Propylene oxide was polymerized using propylene glycol as an initiator and a zinc hexacyanocobaltate complex with t-butyl alcohol as a ligand (hereinafter referred to as "TBA-DMC catalyst") as a catalyst to obtain an oxypropylene polymer (precursor polymer). The number average molecular weight of the precursor polymer was 10,000. Subsequently, 0.97 molar equivalents of 3-isocyanatopropyltrimethoxysilane were added with respect to the hydroxyl group of the precursor polymer, and dioctyltin bisisooctylthioglycol (Neostann U-860: name of a product manufactured by Nitto Kasei Co., Ltd.) was added as a catalyst. The temperature was raised to 80°C, and the resulting mixture was stirred while maintained at 80°C. Analysis was performed with a Fourier transform infrared spectrophotometer, and the reaction was allowed to proceed until completion of the reaction between the hydroxy group and the isocyanate group could be confirmed, thereby obtaining a polyoxyalkylene polymer (polymer A-1) in which a trimethoxysilyl group had been introduced into the terminal group.

### (Synthesis Example 2: polymer A-2)

Using the precursor polymer produced in Synthesis Example 1 with a molecular weight of 10,000, 0.97 molar equivalents of 3-isocyanatopropylmethyldimethoxysilane were added with respect to the hydroxyl group of the precursor polymer, and dioctyltin bisisooctylthioglycol (Neostann U-860: name of a product manufactured by Nitto Kasei Co., Ltd.) was added as a catalyst. Subsequent steps were carried out in the same manner as in Synthesis Example 1 to obtain a polymer A-2 in which a methyldimethoxysilyl group had been introduced into the terminal group.

### (Synthesis Example 3: polymer A-3)

Using propylene glycol as an initiator, propylene oxide was polymerized using a TBA-DMC catalyst to obtain an oxypropylene polymer (precursor polymer) with a number average molecular weight of 5,000. Subsequent steps were carried out in the same manner as in Synthesis Example 1 to obtain a polymer A-3.

### (Synthesis Example 4: polymer A-4)

Using propylene glycol as an initiator, propylene oxide was polymerized using a TBA-DMC catalyst to obtain an oxypropylene polymer (precursor polymer) with a number average molecular weight of 20,000. Subsequent steps were carried out in the same manner as in Synthesis Example 1 to obtain a polymer A-4.

### (Synthesis Example 5: polymer A-5)

Using glycerin as an initiator, propylene oxide was polymerized using a TBA-DMC catalyst to obtain an oxypropylene polymer (precursor polymer) with a number average molecular weight of 10,000. Subsequent steps were carried out in the same manner as in Synthesis Example 1 to obtain a polymer A-5.

### (Synthesis Example 6: polymer A-6)

Using sorbitol as an initiator, propylene oxide was polymerized using a TBA-DMC catalyst to obtain an oxypropylene polymer (precursor polymer) with a number average molecular weight of 10,000. Subsequent steps were carried out in the same manner as in Synthesis Example 1 to obtain a polymer A-6.

### (Synthesis Example 7: polymer B-1)

Propylene oxide was polymerized using n-butyl alcohol as an initiator and TBA-DMC as a catalyst to obtain an oxypropylene polymer (precursor polymer) with a number average molecular weight of 3,000. Subsequent steps were carried out in the same manner as in Synthesis Example 1 to obtain a polymer B-1.

### (Synthesis Example 8: polymer B-2)

Propylene oxide was polymerized using n-butyl alcohol as an initiator and TBA-DMC as a catalyst to obtain an oxypropylene polymer (precursor polymer B'-2) with a number average molecular weight of 1,500. Subsequent steps were carried out in the same manner as in Synthesis Example 1 to obtain a polymer B-2.

### (Synthesis Example 9: polymer B-3)

Propylene oxide was polymerized using n-butyl alcohol as an initiator and TBA-DMC as a catalyst to obtain an oxypropylene polymer (precursor polymer) with a number average molecular weight of 700. Subsequent steps were carried out in the same manner as in Synthesis Example 1 to obtain a polymer B-3.

### (Synthesis Example 10: polymer B-4)

Propylene oxide was polymerized using n-butyl alcohol as an initiator and TBA-DMC as a catalyst to obtain an oxypropylene polymer (precursor polymer) with a number average molecular weight of 5,000. Subsequent steps were carried out in the same manner as in Synthesis Example 1 to obtain a polymer B-4.

### (Synthesis Example 11: polymer B-5)

Using n-butyl alcohol as an initiator, propylene oxide was polymerized using a TBA-DMC catalyst to obtain an oxypropylene polymer (precursor polymer) with a number average molecular weight of 3,000. Subsequently, 2 molar equivalents of isophorone diisocyanate were added with respect to the hydroxyl group of the precursor polymer, and dioctyltin bisisooctylthioglycol (Neostann U-860: name of a product manufactured by Nitto Kasei Co., Ltd.) was added as a catalyst. The temperature was raised to 80°C, and the resulting mixture was stirred while maintained at 80°C. The isocyanate group equivalents in the system were measured in accordance with the method of JIS K 6860: 1974, and the reaction was allowed to proceed until completion of the reaction between the hydroxy group and the isocyanate group could be confirmed, thereby obtaining a prepolymer precursor in which the terminal group had been modified with the isocyanate group, followed by the removal of excess isophorone diisocyanate by thermal decompression. Next, 1.03 molar equivalents of 3-trimethoxysilylpropylbutylamine with respect to the isocyanate group equivalents of the prepolymer precursor was added. The temperature was raised to 80°C, and the resulting mixture was stirred while maintained at 80°C. Analysis was performed with a Fourier transform infrared spectrophotometer, and the reaction was allowed to proceed until completion of the reaction between the hydroxy group and the isocyanate group could be confirmed, thereby obtaining a polymer B-5 in which a trimethoxysilyl group had been introduced into the terminal group via a urea group.

### (Synthesis Example 12: polymer B-6)

The precursor polymer produced in Synthesis Example 7 with a molecular weight of 3,000 was used, and the subsequent steps were carried out in the same manner as in Synthesis Example 2 to obtain a polymer B-6 in which a methyldimethoxysilyl group had been introduced into the terminal group.

### (Synthesis Example 13: polymer B-7)

Using the precursor polymer produced in Synthesis Example 7 with a molecular weight of 3,000, the precursor polymer was alcoholated by adding 1.05 molar equivalents of a methanol solution of sodium methoxide with respect to the hydroxyl group of the precursor polymer. Next, methanol was distilled off by heating under reduced pressure, and allyl chloride was further added in an excess amount relative to the amount of hydroxyl groups in the precursor polymer to convert the terminal group to an allyl group, and the excess allyl chloride was then removed by heating under reduced pressure. Then, in the presence of chloroplatinic acid hexahydrate, 0.85 molar equivalents of methyldimethoxysilane were added with respect to the converted allyl group of the precursor polymer, and the resulting mixture was reacted at 70°C for 5 hours to obtain a polymer B-7 in which a methyldimethoxysilyl group was introduced into the terminal group and which did not contain a -C(=O)NH- structure.

### (Synthesis Example 14: polymer B-8)

Propylene oxide was polymerized using n-butyl alcohol as an initiator and TBA-DMC as a catalyst to obtain an oxypropylene polymer (precursor polymer) with a number average molecular weight of 7,500. Subsequent steps were carried out in the same manner as in Synthesis Example 1 to obtain a polymer B-8.

### (Synthesis Example 15: polymer B-9)

Using n-butyl alcohol as an initiator, propylene oxide was polymerized using a TBA-DMC catalyst to obtain an oxypropylene polymer (precursor polymer) with a number average molecular weight of 7,500. Subsequent steps were carried out in the same manner as in Synthesis Example 11 to obtain a polymer B-9 in which a trimethoxysilyl group had been introduced into the terminal group via a urea group.

### (Synthesis Example 16: polymer B-10)

The precursor polymer produced in Synthesis Example 14 with a number average molecular weight of 7,500 was used, and the subsequent steps were carried out in the same manner as in Synthesis Example 2 to obtain a polymer B-10 in which a methyldimethoxysilyl group had been introduced into the terminal group.

### (Synthesis Example 17: polymer D)

The precursor polymer produced in Synthesis Example 1 with a number average molecular weight of 10,000 was used as the polymer D.

### [Other components]

The additives listed in Table 2 are as follows.
HAKUENKA CCR: precipitated calcium carbonate, name of a product manufactured by Shiraishi Calcium Kaisha, Ltd.
WHITON SB: ground calcium carbonate, name of a product manufactured by Shiraishi Calcium Kaisha, Ltd.
IRGANOX 1010 (referred to as IR1010 in the table): hindered phenolic antioxidant, name of a product manufactured by BASF Corporation
TINUVIN 326 (referred to as Ti326 in the table): benzotriazole-based light stabilizer, name of a product manufactured by BASF Corporation
KBM-1003: vinyltrimethoxysilane, name of a product manufactured by Shin-Etsu Chemical Co., Ltd.
KBM-403: 3-glycidyloxypropyltrimethoxysilane, name of a product manufactured by Shin-Etsu Chemical Co., Ltd.
KBM-603: 3-(2-aminoethylamino)propyltrimethoxysilane, name of a product manufactured by Shin-Etsu Chemical Co., Ltd.
U-860: dioctyltin catalyst, name of a product manufactured by Nitto Kasei Co., Ltd.
S-1: dioctyltin catalyst, name of a product manufactured by Nitto Kasei Co., Ltd.

### [Preparation of curable composition]

### (Cases 1 to 25)

Curable compositions were prepared using polymers and additives added in amounts (parts by mass) shown in Tables 3 to 6. The amount of each component added shown in Tables 3 to 6 is a value (unit: parts by mass) with respect to a total of 100 parts by mass of the polymer A, polymer B, and polymer D. The viscosity measurements, tensile shear tests, and bleed out tests described above were performed using the obtained curable compositions. Cases 1 to 8, 18, 20, 22 and 23 are Examples of the present invention, and Cases 9 to 17, 19, 21, 24 and 25 are Comparative Examples. The results are shown in Tables 3 to 6.

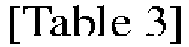

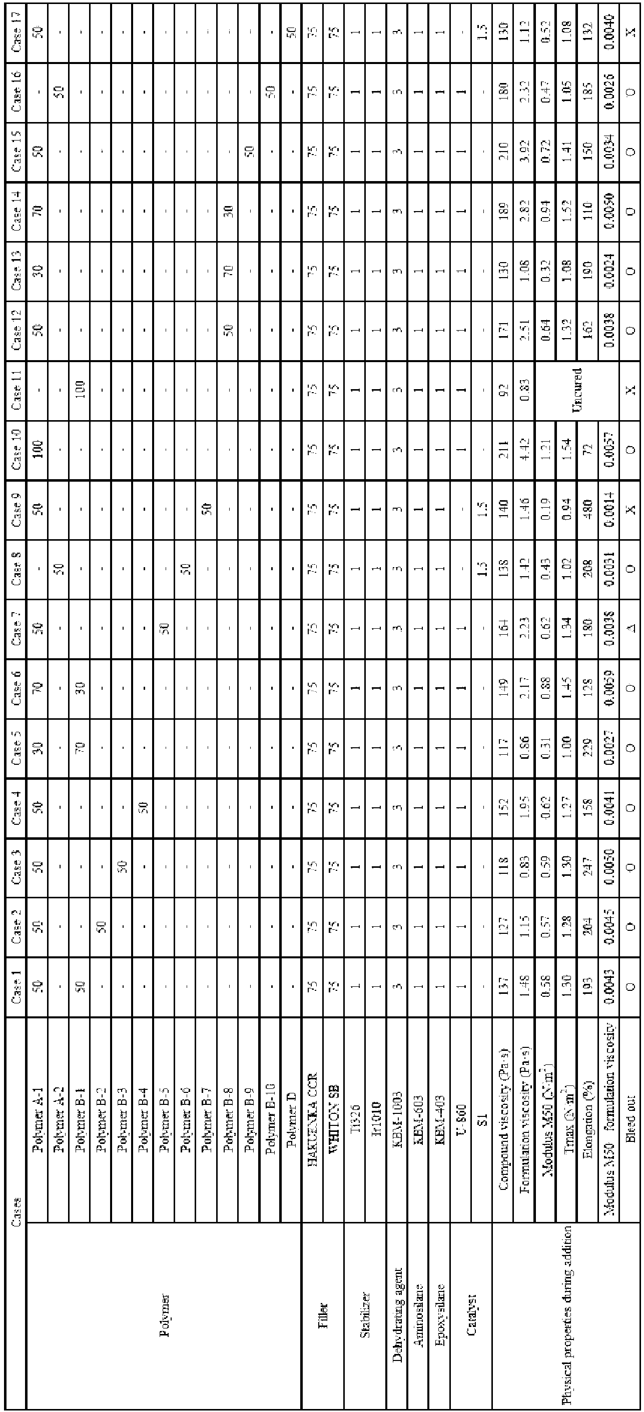

**[Table 4]**

| Cases | | Case 18 | Case 19 |
|---|---|---|---|
| Polymer | Polymer A-3 | 50 | 50 |
| | Polymer B-1 | 50 | - |
| | Polymer B-8 | - | 50 |
| Filler | HAKUENKA CCR | 75 | 75 |
| | WHITON SB | 75 | 75 |
| Stabilizer | Ti326 | 1 | 1 |
| | IR1010 | 1 | 1 |
| Dehydrating agent | KBM-1003 | 3 | 3 |
| Aminosilane | KBM-603 | 1 | 1 |
| Epoxysilane | KBM-403 | 1 | 1 |
| Catalyst | U-860 | 1 | 1 |
| Physical properties during addition | Compound viscosity (Pa·s) | 116 | 149 |
| | Formulation viscosity (Pa·s) | 0.75 | 1.27 |
| | Modulus M50 (N/m²) | 1.20 | 1.28 |
| | Tmax (N/m²) | 1.42 | 1.55 |
| | Elongation (%) | 69 | 55 |
| | Modulus M50 / formulation viscosity | 0.0103 | 0.0086 |
| | Bleed out | O | O |

**[Table 5]**

| Cases | | Case 20 | Case 21 |
|---|---|---|---|
| Polymer | Polymer A-4 | 50 | 50 |
| | Polymer B-1 | 50 | - |
| | Polymer B-8 | - | 50 |
| Filler | HAKUENKA CCR | 75 | 75 |
| | WHITON SB | 75 | 75 |
| Stabilizer | Ti326 | 1 | 1 |
| | IR1010 | 1 | 1 |
| Dehydrating agent | KBM-1003 | 3 | 3 |
| Aminosilane | KBM-603 | 1 | 1 |
| Epoxysilane | KBM-403 | 1 | 1 |
| Catalyst | U-860 | 1 | 1 |
| Physical properties during addition | Compound viscosity (Pa·s) | 180 | 230 |
| | Formulation viscosity (Pa·s) | 3.26 | 5.82 |
| | Modulus M50 (N/m²) | 0.34 | 0.34 |
| | Tmax (N/m²) | 1.43 | 1.49 |
| | Elongation (%) | 444 | 360 |
| | Modulus M50 / formulation viscosity | 0.0019 | 0.0015 |
| | Bleed out | O | O |

**[Table 6]**

| Cases | | Case 22 | Case 23 | Case 24 | Case 25 |
|---|---|---|---|---|---|
| Polymer | Polymer A-5 | 50 | - | 50 | - |
| | Polymer A-6 | - | 50 | - | 50 |
| | Polymer B-1 | 50 | 50 | - | - |
| | Polymer B-8 | - | - | 50 | 50 |
| Filler | HAKUENKA CCR | 75 | 75 | 75 | 75 |
| | WHITON SB | 75 | 75 | 75 | 75 |
| Stabilizer | Ti326 | 1 | 1 | 1 | 1 |
| | IR1010 | 1 | 1 | 1 | 1 |
| Dehydrating agent | KBM-1003 | 3 | 3 | 3 | 3 |
| Aminosilane | KBM-603 | 1 | 1 | 1 | 1 |
| Epoxysilane | KBM-403 | 1 | 1 | 1 | 1 |
| Catalyst | U-860 | 1 | 1 | 1 | 1 |
| Physical properties during addition | Compound viscosity (Pa·s) | 125 | 132 | 164 | 140 |
| | Formulation viscosity (Pa·s) | 0.88 | 1.03 | 1.53 | 1.08 |
| | Modulus M50 (N/m²) | 0.94 | 1.36 | 1.01 | 1.28 |
| | Tmax (N/m²) | 1.52 | 1.54 | 1.56 | 1.18 |
| | Elongation (%) | 39 | 31 | 31 | 22 |
| | Modulus M50 / formulation viscosity | 0.0075 | 0.0103 | 0.0062 | 0.0092 |
| | Bleed out | O | O | O | O |

As shown in Table 3, bleed out was unlikely to occur in the cured products of Cases 1 to 8 which contained the polymers B-1 to B-6. On the other hand, bleed out occurred in the cured product of Case 9 which contained the polymer B-7. Since the polymer B-7 does not contain the organic group (i), it is thought that hard segments brought about by the interactions derived from hydrogen bonding due to the organic group (i) are less likely to form, and bleed out is more likely to occur. Further, because it was synthesized using the method (a), impurities having unsaturated groups were produced as by-products, and unreacted materials having allyl groups at the terminals were present in the polymer, and therefore, it is believed that there are more polymers that do not contribute to crosslinking than in polymers B-1 to B-6, which is also considered to be one of the reasons why bleed out occurred.

Moreover, it was found that Cases 1 to 6 and 8 were less likely to cause bleed out as compared with Case 7. It is thought to be due to the fact that impurities without reactive silyl groups at the terminal groups were less likely to be produced as by-products in the synthesis of polymer B in Cases 1 to 6 and 8.

Further, in Case 1, the ratio of modulus with respect to the formulation viscosity for polymer A-1 and polymer B-1 (Mn: 3,000) was 0.0043, whereas in Case 9, the ratio of modulus with respect to the formulation viscosity for polymer A-1 and polymer B-7 (Mn: 3,000) was 0.0014. In other words, in Case 1, it was shown that by using the polymer B-1 having the organic group (i) as a plasticizer, the modulus of the cured product can be maintained high while exhibiting the same level of viscosity reducing effects as in B-7.

Further, in Case 1, the ratio of modulus with respect to the formulation viscosity for polymer A-1 and polymer B-1 (Mn: 3,000) was 0.0043, whereas in Case 12, the ratio of modulus with respect to the formulation viscosity for polymer A-1 and polymer B-8 (Mn: 7,500) was 0.0038. In other words, in Case 1, it was shown that by using the polymer B-1 with a small Mn as a plasticizer, the modulus of the cured product can be maintained high while reducing the viscosity of the mixture.

As shown in Table 4, even when comparing Cases 18 and 19 (polymer A-3, Mn: 5,000) in which the polymer A had a low molecular weight, the ratio of modulus with respect to the formulation viscosity for polymer A-3 and polymer B-1 in Case 18 containing polymer B-1 was 0.0103, whereas the ratio of modulus with respect to the formulation viscosity for polymer A-3 and polymer B-8 in Case 19 was 0.0086. In other words, in Case 18, it was shown that by using the polymer B-1 with a small Mn as a plasticizer, the modulus of the cured product can be maintained high while reducing the viscosity of the mixture.

As shown in Table 5, even when comparing Case 20 and Case 21 (polymer A-4, Mn: 20,000) in which the polymer A had a high molecular weight, in Case 20, in a similar manner, it was shown that by using the polymer B-1 with a small Mn as a plasticizer, the modulus of the cured product can be maintained high while reducing the formulation viscosity.

As shown in Table 6, even when the polymer A had an average number of terminal groups of 2.90 (polymer A-5) and an average number of terminal groups of 5.60 (polymer A-6), in Cases 22 and 23 in which the polymer B-1 was used, compared to Cases 24 and 25 in which the polymer B-8 was used, it was shown that by using the polymer B-1 with a small Mn as a plasticizer, the modulus of the cured product can be maintained high while reducing the formulation viscosity.

### REFERENCE SIGNS LIST

L1: total length of dumbbell test specimen; L2: length of narrow parallel portion; L3: length from narrow parallel portion to end portion; L4: length from narrow parallel portion to wide parallel portion; W1: width of narrow parallel portion; W2: width of wide parallel portion; R¹: radius of shoulder portion; R²: major radius

## Claims

1. A curable composition comprising a polymer A and a polymer B,
wherein said polymer A is an oxyalkylene polymer that has an average of 2.00 or more terminal groups within one molecule and has a reactive silicon group represented by the following Formula (1);
said terminal groups of said polymer A include said reactive silicon group, an unsaturated group, an isocyanate group, an amino group, or a hydroxyl group;
said polymer B is an oxyalkylene polymer that has an average of 1.00 to 1.30 terminal groups within one molecule and has a reactive silicon group which is formed via one or more organic groups represented by the following Formula (i) and is represented by the following Formula (2);
said terminal groups of said polymer B include said reactive silicon group, an unsaturated group, an isocyanate group, an amino group, or a hydroxyl group; and
said polymer B has a number average molecular weight of 5,000 or less.
-SiR¹ₐX¹₃₋ₐ Formula (1)
wherein R¹ is a monovalent organic group having 1 to 20 carbon atoms and represents an organic group other than a hydrolyzable group, and X¹ represents a hydroxyl group or a hydrolyzable group; a is an integer from 0 to 2; when a is 2, R¹ groups may be the same as or different from each other, and when a is 0 or 1, X¹ groups may be the same as or different from each other.
-C(=O)NH- Formula (i)
-SiR²_{b}X²_{3-b} Formula (2)
wherein R² is a monovalent organic group having 1 to 20 carbon atoms and represents an organic group other than a hydrolyzable group, and X² represents a hydroxyl group or a hydrolyzable group; b is an integer from 0 to 2; when b is 2, R² groups may be the same as or different from each other, and when b is 0 or 1, X² groups may be the same as or different from each other.

2. The curable composition according to Claim 1, wherein the number of organic groups represented by said Formula (i) contained in said polymer B is one.

3. The curable composition according to Claim 1,
wherein a content of said polymer B is from 20 to 80 parts by mass with respect to a total content of 100 parts by mass of said polymer A and said polymer B.

4. The curable composition according to Claim 1,
wherein said polymer A is an oxyalkylene polymer formed via one or more organic groups represented by said Formula (i).

5. The curable composition according to Claim 1, wherein said polymer B has a number average molecular weight of 500 to 5,000.

6. The curable composition according to Claim 1, wherein said polymer A has a number average molecular weight of 2,400 to 20,000.

7. The curable composition according to Claim 1,
wherein a total content of the polymer A and the polymer B with respect to a total mass of the curable composition is from 2 to 70% by mass.

8. A cured product of the curable composition according to any one of Claims 1 to 7.
